# EUROPEAN PATENT APPLICATION

(11) **EP 3 617 364 A1**
(43) Date of publication of application: **04.03.2020**
(21) Application number: 19194648.2
(22) Date of filing: 30.08.2019
(51) Int. Cl.: D06F 33/02, D06F 35/00, D06F 37/30, D06F 39/00

(54) **ARTIFICIAL INTELLIGENCE WASHING MACHINE AND CONTROLLING METHOD THEREFOR**

(30) Priority: 30.08.2018 KR 20180103082; 07.08.2019 KR 20190096302
(71) Applicant: LG ELECTRONICS INC., Yeongdeungpo-Gu Seoul 07336 (KR)
(72) Inventor: IM, Myunghun, 08592 Seoul (KR); JUNG, Hwanjin, 08592 Seoul (KR); YU, Seonhwa, 08592 Seoul (KR); KIM, Sunggyun, 08592 Seoul (KR); WOO, Kyungchul, 08592 Seoul (KR)
(74) Representative: Vossius & Partner Patentanwälte Rechtsanwälte mbB

(57) **Abstract**

The present invention relates to a method of controlling a washing machine, comprising: a first detection step of acquiring amount of laundry accommodated in a washing tub (4); selecting any one washing course from among a plurality of washing courses including a first washing course performing washing according to a washing mode configured based on the amount of laundry and a second washing course performing washing according to a washing mode configured based on the amount of the laundry and a state of the laundry; and performing the selected washing course, wherein the second washing course includes a second detection step of acquiring the state of the laundry by an output from an output layer of an artificial neural network while using a current value applied to a motor (9) for rotating the washing tub during an accelerated rotation of the washing tub as an input data of an input layer of the artificial neural network previously learned by machine learning, wherein selecting any one washing course comprises selecting any one washing course from among the plurality of washing courses based on a first laundry amount acquired in the first detection step.

## Description

The present invention relates to a washing machine and a control method of washing machine, and more particularly, to a washing machine that performs laundry amount detection and laundry material detection based on machine learning, and a control method of washing machine.

Generally, a washing machine is an apparatus for separating contaminants from clothes, bedding, etc. (hereinafter, referred to as "laundry") by using chemical decomposition of water and detergent, physical action such as friction between water and laundry, and the like.

Washing machines are classified into a stirrer-type washing machine, a vortex-type washing machine, and a drum-type washing machine. Among those washing machines, the drum-type washing machine is provided with a water storage tank for storing water, and a washing tub which is rotatably provided in the water storage tank and accommodates laundry. The washing tub is provided with a plurality of through holes through which water passes. The washing operation is generally divided into a washing process, a rinsing process, and a dewatering process.

The washing process removes contaminants from the laundry due to the friction of the water stored in the water storage tank and the laundry stored in the drum, and the chemical action of the detergent stored in the water.

The rinsing process is to rinse the laundry by supplying water in which the detergent is not accommodated into the water storage tank, and in particular, the detergent absorbed by the laundry during the washing process is removed. A laundry softener may be supplied together with water during the rinsing process.

The dewatering process is to rotate the washing tub at a high speed to dewater the laundry, after the rinsing process is completed. Usually, all the operations of the washing machine are completed by completing the dewatering process. However, in the case of a washer-dryer, a drying process may be further added after the dewatering process.

Usually, the washing operation is set according to the amount of the laundry (hereinafter, also referred to as "laundry amount") introduced into the washing tub. For example, the water level, the washing strength, the drainage time, and the dewatering time are set according to the laundry amount.

The washing performance is affected not only by the amount of the laundry but also by the type of the laundry (hereinafter, also referred to as "laundry material"). When only the laundry amount is taken into consideration in setting the washing operation, sufficient washing performance cannot be expected.

In addition, there is a problem that the degree of damage to laundry varies depending on the type of the laundry even in the case of the same washing operation, and the washing operation set only considering the laundry amount damages the laundry.

Conventional machine learning is based on the statistical-based classification, regression, and cluster models. In particular, in the supervised learning of classification and regression models, the characteristics of learning data and a learning model that distinguishes new data based on such a characteristic is previously defined by a person. On the other hand, in deep learning, a computer searches and identifies characteristics by itself.

One of the factors that accelerated the development of deep learning is the deep-learning framework that is provided as open source. For example, the deep learning framework includes Theano of the University of Montreal, Canada, Torch of New York University, U.S.A., Caffe of the University of California at Berkeley, TensorFlow of Google, and the like.

With the release of deep learning frameworks, in addition to deep learning algorithm, the extraction and selection of data used in the learning process, the learning method, and the learning are becoming more important for effective learning and perception.

In addition, researches to utilize artificial intelligence and machine learning for various products and services are increasing.

Patent Registration KR 10-1841248 (hereinafter, also referred to as "prior art") discloses a control method of detecting the amount of laundry by using the speed of a motor as input data of an artificial neural network that has been learned through machine learning.

The prior art detects only the amount of laundry, and there is a problem of washing performance and laundry damage as described above.

The present invention has been made in view of the above problems, and provides a washing machine for quickly and accurately detecting laundry amount and/or laundry material based on machine learning, and a control method thereof.

The present invention further provides a washing machine that can shorten the time required for the determination by efficiently processing data used for the determination of laundry amount/laundry material, and a control method thereof.

The present invention further provides a washing machine that can classify the laundry according to various criteria such as softness/hardness of laundry, wetting rate, volume difference between wet laundry and dry laundry, and a control method thereof.

The present invention further provides a washing machine for setting a range for performing the laundry amount/laundry material detection based on machine learning, and a control method thereof.

In accordance with an aspect of the present invention, a method of controlling a washing machine includes: a first detection step of acquiring an amount of laundry accommodated in a washing tub; selecting any one washing course based on a first laundry amount acquired in the first detection step from among a plurality of washing courses; and performing the selected washing course.

The plurality of washing courses includes a first washing course performing washing according to a washing mode configured based on the amount of laundry and a second washing course performing washing according to a washing mode configured based on the amount of the laundry and a state of the laundry. The plurality of washing courses may include a third washing course that performs washing according to a preset washing mode.

The selecting the washing course may include selecting the first washing course, when the first laundry amount is equal to or more than a preset first threshold value; and selecting the second washing course, when the first laundry amount is less than the first threshold value.

The selecting the washing course may include selecting the first washing course, when the first laundry amount is equal to or more than a preset first threshold value; selecting the second washing course, when the first laundry amount is greater than a second threshold value less than the first threshold value, and is less than the first threshold value; and selecting the third washing course, when the first laundry amount is equal to or less than the second threshold value.

The second washing course includes a second detection step of acquiring the state of the laundry by an output of an output layer of an artificial neural network while using a current value applied to a motor for rotating the washing tub during an accelerated rotation of the washing tub as an input data of an input layer of the artificial neural network previously learned or trained, respectively, by machine learning.

The second detection step includes acquiring the laundry amount accommodated in the washing tub by the output of the output layer of the artificial neural network, while using the current value as the input data.

The second detection step may include accelerating the washing tub; acquiring a current value applied to the motor in a section in which the washing tub is accelerated and rotated; and acquiring the laundry state by the output of the output layer of the artificial neural network, while using the current value as the input data.

The second detection step may further include detecting a rotation speed of the washing tub.

The accelerating the washing tub may include accelerating the washing tub from a first rotation speed up to a second rotation speed that is faster than the first rotation speed;

The second rotation speed may be a rotation speed at which the laundry is rotated integrally with the washing tub. The second rotation speed may be a rotation speed at which the laundry in the washing tub rotates while being attached to the washing tub without falling even from the highest point of the washing tub. The second rotational speed may be a rotation speed at which the centrifugal force acting on the laundry by the rotation of the washing tub is greater than the gravity acting on the laundry.

The second rotation speed may be 60 rpm to 80 rpm.

The first rotation speed may be 10 rpm to 20 rpm.

The accelerating the washing tub may include accelerating a rotation speed of the washing tub at a constant acceleration from the first rotation speed up to the second rotation speed.

The acquiring the laundry state may include selecting a current value corresponding to a section in which the rotation speed of the washing tub is accelerated from the first rotation speed up to the second rotation speed among current values acquired in acquiring a current value, based on the detected speed value; and using the selected current value as the input data.

The acquiring the laundry state may include using the current value applied to the motor as the input data in a section in which the rotation speed of the washing tub is accelerated from the first rotation speed up to the second rotation speed.

The second washing course may include selecting any one washing mode based on the state of the laundry among the plurality of washing modes, after the second detection step; and performing washing according to the selected washing mode.

The plurality of washing modes may be classified in consideration of a risk of wear of the laundry and a washing intensity.

The state of the laundry is classified in consideration of a risk of wear of the laundry and a washing intensity.

Before the second detection step, the second washing course may further include a water supply step of supplying washing water into the washing tub.

The method may further include, before the first detection step, receiving a washing course through an input unit.

The selecting any one washing course includes: selecting the first washing course when the received washing course is the first washing course; and selecting any one washing course based on the first laundry amount among the plurality of washing courses, when the received washing course is the second washing course.

The method may further include, before the first detection step, receiving a temperature of washing water through an input unit.

The selecting any one washing course may include: selecting the first washing course, when the received temperature of the washing water is equal to or higher than a preset limit temperature; and selecting any one washing course based on the first laundry amount among the plurality of washing courses, when the received temperature of the washing water is less than the limit temperature.

A washing machine according to another aspect of the present invention is configured to perform the above mentioned control method.

In accordance with another aspect of the present invention, the washing machine includes: a washing tub which accommodates laundry and is rotatably provided, a motor for rotating the washing tub, a controller for controlling the motor to rotate the washing tub, and a current detection unit for detecting a current of the motor.

The controller may acquire the laundry amount and the laundry state in an output layer of an artificial neural network while using a current value detected by the current detection unit during an accelerated rotation of the washing tub as an input data of an input layer of the artificial neural network. The artificial neural network may be previously learned or trained, respectively, by machine learning.

The controller may perform a washing processes based on the laundry amount and the laundry state acquired by the output of the artificial neural network.

The above and other objects, features and advantages of the present invention will be more apparent from the following detailed description in conjunction with the accompanying drawings, in which:
FIG. 1 is a sectional view of a washing machine according to an embodiment of the present invention;
FIG. 2 is a block diagram showing the control relationship between the main components of the washing machine of FIG. 1;
FIG. 3 shows a current pattern applied to a motor according to the state of laundry and a load amount (laundry amount);
FIG. 4 shows a current pattern for each laundry material;
FIG. 5 shows a current pattern for each load while controlling the speed of a motor by a preset method;
FIG. 6 illustrates a process of processing current values acquired by a current detection unit as input data of an artificial neural network;
FIG. 7 is a schematic diagram showing an example of an artificial neural network;
FIG. 8 is a schematic diagram dividing a process of determining a laundry amount and a laundry material by using a current value of a motor into a learning process and a recognition process;
FIG. 9A is a graph showing current value detected by a current detection unit, and FIG. 9B is a graph showing average values acquired by processing a moving average filter;
FIG. 10 is a graph showing current values detected by a current detection unit;
FIG. 11 is a graph showing values processed so as to use current values of the graph shown in FIG. 9 as input data of an artificial neural network;
FIG. 12 is a flowchart illustrating a method of controlling a washing machine according to an embodiment of the present invention;
FIG. 13 is a graph in which current patterns for each load are superimposed;
FIG. 14 is a graph in which current patterns corresponding to loads of 0 to 6 kg are classified in FIG. 13;
FIG. 15 is a graph showing current patterns corresponding to loads of 7 to 9 kg in FIG. 13; and
FIG. 16 is a flowchart showing a method of controlling a washing machine according to a first embodiment of the present invention.

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention. Reference will now be made in detail to the preferred embodiments of the present invention, examples of which are illustrated in the accompanying drawings. The suffixes "module" and "unit" in elements used in description below are given only in consideration of ease in preparation of the specification and do not have specific meanings or functions. Therefore, the suffixes "module" and "unit" may be used interchangeably.

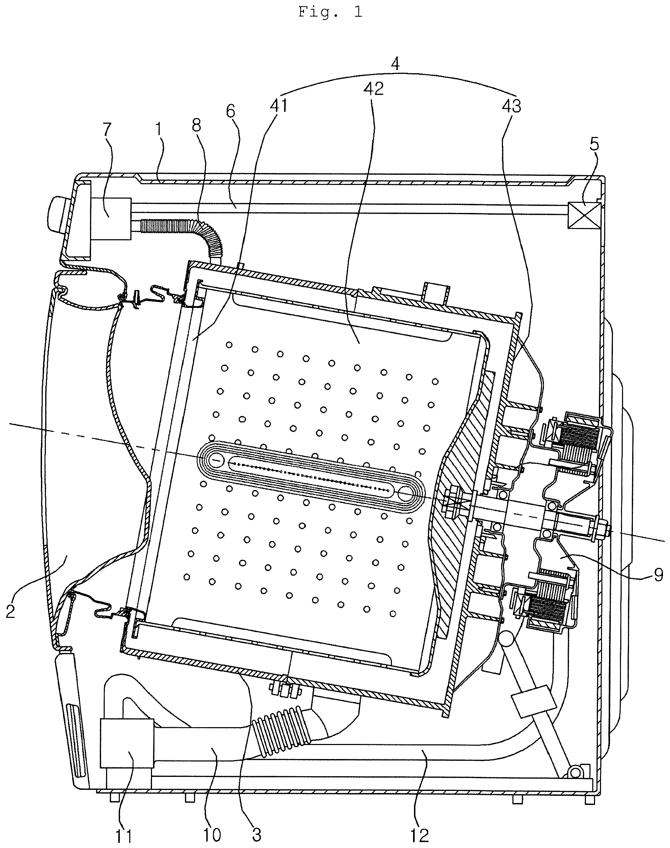

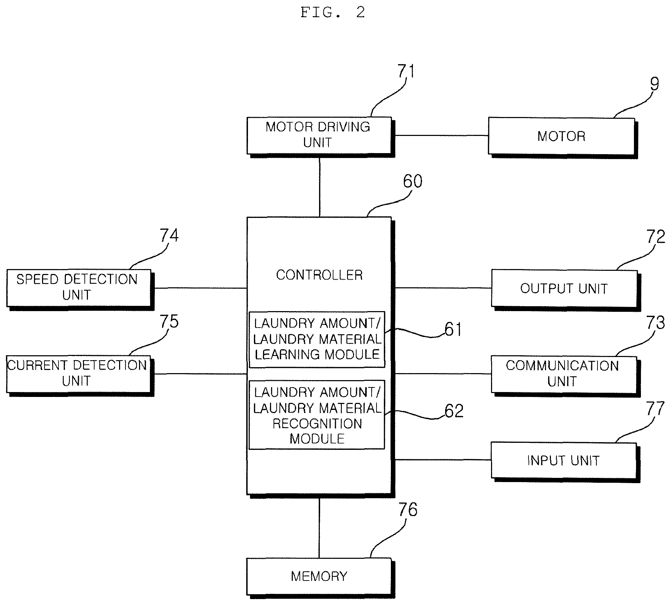

FIG. 1 is a sectional view of a washing machine according to an embodiment of the present invention. FIG. 2 is a block diagram showing the control relationship between the main components of the washing machine of FIG. 1.

Referring to FIG. 1, the washing machine according to an embodiment of the present invention includes a casing 1 forming an outer shape, a water storage tank 3 which is disposed in the casing 1 and stores washing water, a washing tub 4 which is rotatably installed in the water storage tank 3 and into which laundry is loaded, and a motor 9 for rotating the washing tub 4.

The washing tub 4 includes a front cover 41 having an opening for loading and unloading the laundry, a cylindrical drum 42 which is substantially horizontally disposed and whose front end is coupled with the front cover 41, and a rear cover 43 coupled to a rear end of the drum 42. The rotation shaft of the motor 9 may pass through the rear wall of the water storage tank 3 and be connected to the rear cover 43. A plurality of through holes may be formed in the drum 42 so that water can be exchanged between the washing tub 4 and the water storage tank 3.

The washing tub 4 is rotated around a horizontal shaft. Here, the term "horizontal" does not mean geometric horizontal in the strict sense. That is, since it is closer to horizontal than vertical even when it is inclined at a certain angle with respect to the horizontal as shown in FIG. 1, it can be said that the washing tub 4 is rotated around a horizontal shaft.

A laundry loading port is formed in the front surface of the casing 1, and a door 2 for opening and closing the laundry loading port is rotatably provided in the casing 1. A water supply valve 5, a water supply pipe 6, and a water supply hose 8 may be installed in the casing 1. When the water supply valve 5 is opened to perform water supply, the washing water passed through the water supply pipe 6 may be mixed with the detergent in a dispenser 7 and then supplied to the water storage tank 3 through the water supply hose 8.

The input port of the pump 11 is connected to the water storage tank 3 by a discharge hose 10 and the discharge port of the pump 11 is connected to a drain pipe 12. The water discharged from the water storage tank 3 through the discharge hose 10 is pumped by the pump 11 to flow along the drain pipe 12 and then discharged to the outside of the washing machine.

Referring to FIG. 2, the washing machine according to the embodiment of the present invention includes a controller 60 for controlling the overall operation of the washing machine, an input unit 77 controlled by the controller 60, a motor driving unit 71, an output unit 72, a communication unit 73, a speed detection unit 74, a current detection unit 75, and a memory 76.

The controller 60 may control a series of washing processes of washing, rinsing, dewatering, and drying.

The controller 60 may receive a series of washing processes of washing, rinsing, dewatering, and drying from a user through the input unit 77. The controller 60 may perform washing and rinsing processes according to a preset algorithm, and the controller 60 may also control the motor driving unit 71 according to the algorithm.

The input unit 77 may receive a washing course from a user. For example, a user may input any one of various courses, such as a standard washing course, a boiling course, a baby clothes course, a stain course, and the like, into the washing machine through the input unit 77.

The memory 76 may previously store a series of algorithms for washing, rinsing, dewatering, and drying of the washing courses. The algorithm may include a water supply level, a temperature of washing water, an execution time of washing, rinsing, dewatering, drying, etc., a driving pattern of motor in each process (e.g., rotation speed, rotation time, acceleration, braking), and the like.

The input unit 77 may receive a washing option from a user. For example, after selecting a washing course, the user may receive information on factors affecting a series of washing such as the washing time, the temperature of the washing water, the number of times of rinsing, the dewatering intensity, the drying temperature, and the like (hereinafter, referred to as the 'control factor').

The controller 60 may control a series of washing processes by reflecting a control factor that previously received the algorithm stored according to the washing course through the input unit 77.

The motor driving unit 71 may control the driving of the motor 9 in response to a control signal applied from the controller 60. The control signal may be a signal for controlling the target speed of the motor 9, the acceleration slope (or acceleration), the driving time, and the like.

The motor driving unit 71 is implemented to drive the motor 9 and may include an inverter (not shown) and an inverter controller (not shown). Further, the motor driving unit 71 may further include a converter or the like that supplies DC power inputted to the inverter.

For example, when the inverter controller (not shown) outputs a switching control signal of pulse width modulation (PWM) scheme to the inverter (not shown), the inverter (not shown) performs a high-speed switching operation, and may supply AC power of a certain frequency to the motor 9.

The speed detection unit 74 detects the rotation speed of the washing tub 4. The speed detection unit 74 may detect the rotation speed of the rotor of the motor 9. When a planetary gear train for rotating the washing tub 4 is provided by changing the rotation ratio of the motor 9, the rotation speed of the washing tub 4 may be a value acquired by converting the rotation speed of the rotor detected by the speed detection unit 74 in consideration of the deceleration or speed increasing ratio of the planetary gear train.

The controller 60 may control the motor driving unit 71 so that the motor 9 follows a preset target speed by feeding back the current speed transmitted from the speed detection unit 74.

The current detection unit 75 detects a current (hereinafter, referred to as 'current') applied to the motor 9 and transmits the detected current to the controller 60. The controller 60 may detect the laundry amount and the laundry material by using the received current data as input data. At this time, the current values as the input data include the values acquired during the process where the motor 9 is accelerated toward a preset target speed.

When the rotation of the motor 9 is controlled by the vector control based on the torque current and the magnetic flux current, the present current may be a torque axis (q-axis) component of the current flowing in a motor circuit, i.e., a torque current Iq.

The output unit 72 outputs the operating state of the washing machine. The output unit 72 may be an image output device such as an LCD or LED for outputting a visual display, or a sound output device such as a buzzer for outputting sound. The controller 60 may control the output unit 72 to output information on the laundry amount or the laundry material.

The memory may store a programmed artificial neural network, current patterns for each laundry amount and/or laundry material, a database (DB) constructed through a machine learning based on the current pattern, machine learning algorithm, a present current value detected by the current detection unit 75, a value acquired by averaging the present current values, a value acquired by processing the average values according to a parsing rule, data transmitted and received through the communication unit 73, and the like

In addition, the memory 76 may store various control data for controlling the overall operation of the washing machine, washing setting data inputted by a user, washing time calculated according to the washing setting, data on the washing course or the like, data for determining occurrence of error of the washing machine, and the like.

The communication unit 73 may communicate with a server connected to a network. The communication unit 73 may include one or more communication modules such as an Internet module and a mobile communication module. The communication unit 73 may receive learning data and various data such as algorithm update from the server.

The controller 60 may process various data received through the communication unit 73 and update the memory 76. For example, if the data inputted through the communication unit 73 is update data for an operation program previously stored in the memory 76, it is used to update the memory 76, and if the inputted data is a new operation program, it can be additionally stored in the memory 76.

Deep Learning is a scheme of teaching computers people's minds based on Artificial Neural Network (ANN) for constructing artificial intelligence, and is an artificial intelligence technology that allows a computer to learn by itself like a person without being taught by a person. The Artificial Neural Network (ANN) may be implemented in software form, or in hardware form such as a chip.

The washing machine may process the current values detected by the current detection unit 75 based on machine learning and determine the characteristics (hereinafter, referred to as laundry characteristics) of laundry loaded into the washing tub 4. Such a laundry characteristic may be exemplified by the laundry amount and the state of laundry (hereinafter, also referred to as 'laundry material'), and the controller 60 may determine the laundry material for each laundry amount based on machine learning. For example, the controller 60 may acquire the laundry amount, and may determine the belonged category among categories that are pre-classified according to the laundry material. The state of the laundry may be defined based on various factors such as the material of the laundry, the degree of softness (e.g., soft laundry/hard laundry), the ability of the laundry to hold water (i.e., wetting rate), a volume difference between wet laundry and dry laundry, the composition of the laundry (i.e., the mixing ratio of the soft laundry and the hard laundry).

The controller 60 may detect the laundry volume, by using the present current value detected by the current detection unit 75 up to the time point of reaching the target speed, as the input data of the artificial neural network previously learned by machine learning.

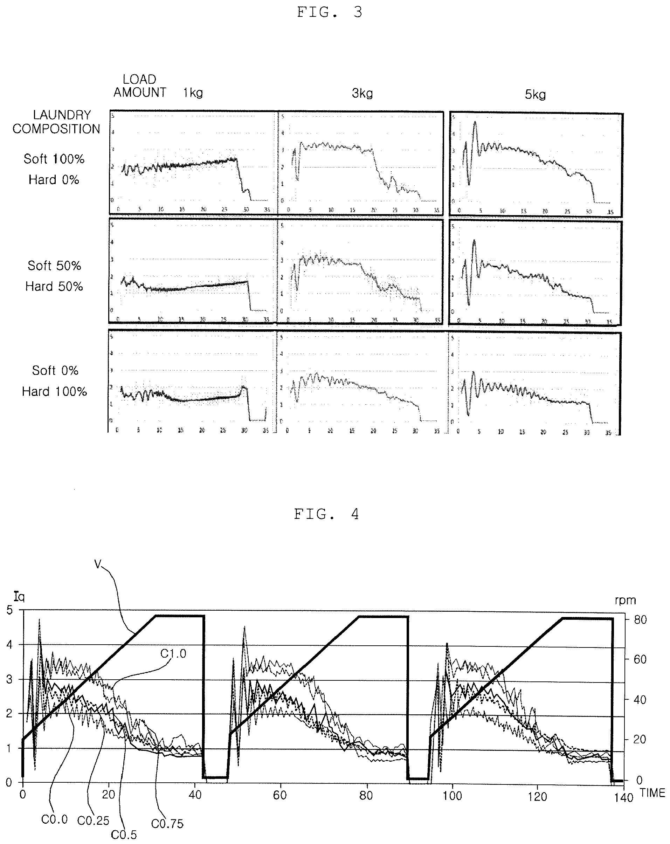

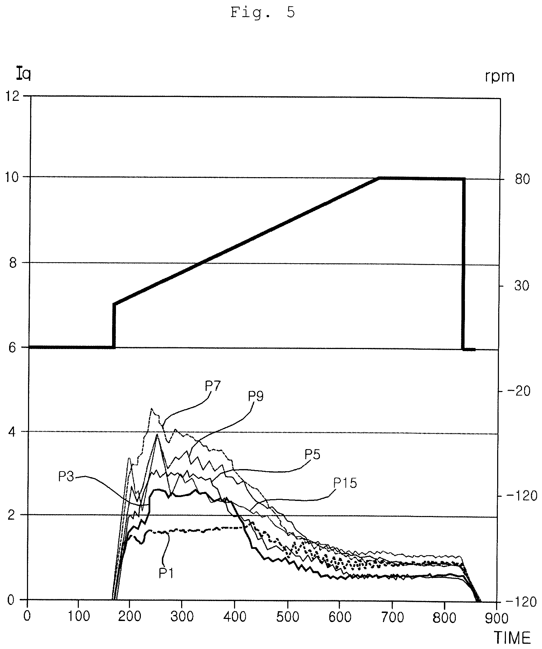

FIG. 3 shows a current pattern applied to a motor according to the state of laundry and a load amount (laundry amount). FIG. 4 shows a current pattern for each laundry material. FIG. 5 shows a current pattern for each load while controlling the speed of a motor by a preset method.

Each graph shown in FIG. 3 shows the present current measured while accelerating the washing tub 4 up to a preset target rotation speed (e.g., 80 rpm), and these graphs show the current measured while varying the composition of the laundry (i.e., the mixing ratio of the soft laundry and the hard laundry). That is, the trend of the pattern change according to the load amount can be determined through the horizontally arranged graphs. For example, in the case of the same laundry composition, it can be seen that the maximum value of the present current becomes larger at the beginning of the acceleration of the washing tub 4, as the load becomes larger. Therefore, it can be said that the early data of the graph is appropriate to be used to determine the load amount (laundry amount).

Through the vertically arranged graphs, the change in the shape of the pattern according to the laundry composition can be determined. For example, in the case of the same load amount, it can be seen that the current value is shifted downward as the ratio of coarse laundry becomes larger, particularly, in the mid and latter half of acceleration of the washing tub 4 or in a target rotation speed maintenance section. Therefore, it can be said that it is appropriate to take data necessary to acquire the laundry material after a section in which data to be used for determining the laundry amount is acquired.

FIG. 4 shows a current pattern for each composition of laundry (each laundry material). In FIG. 4, C0.0 shows soft laundry 100%, C0.25, C0.5, and C0.75 show soft laundry 100% sequentially, the ratio of soft laundry:hard laundry is 1:3, 1:1, 3:1, and C1.0 shows the case of hard laundry 100%. In each case, the total laundry amount (load amount) acquired by adding the soft laundry to the hard laundry is constant.

The graphs show that the current pattern is varied when the composition of laundry is varied, even if the load amount is the same. Therefore, classification according to the composition of laundry (or laundry material) may be achieved based on the machine learning of the current pattern.

Such laundry amount/laundry material detection can be repeated a plurality of times, and in the embodiment, it is repeated three times, but the number of times is not limited thereto. The laundry amount/laundry material detection may be repeated a plurality of times in the same step, or may be repeated a plurality of times in different steps.

The controller 60 may set washing algorithm or change the setting of washing algorithm according to the result of each laundry amount/laundry material detection, and may control the operation of the washing machine according to the setting.

The graphs P1, P3, P5, P7, P9, and P15 shown in FIG. 5 show the cases where the laundry amounts are 1, 3, 5, 7, 9, and 15 kg, respectively. As a whole, the graphs show that in the early stage of the acceleration of the washing tub 4, the present current value rapidly rises up to a certain level and converges to a constant value as it goes to the latter half. In particular, it can be seen that the deviation of the present current value due to the laundry amount is noticeable in the early stage of acceleration of the washing tub 4.

The controller 60 may include a laundry amount/laundry material learning module 61 and a laundry amount/laundry material recognition module 62. The laundry amount/laundry material learning module 61 may perform the machine learning by using the present current value detected by the current detection unit 75 or a value acquired by processing the present current value. Through such machine learning, the laundry amount/laundry material learning module 61 may update the database stored in the memory 76.

Any of the unsupervised learning and the supervised learning may be used as the learning method of the laundry amount/laundry material learning module 61.

The laundry amount/laundry material recognition module 62 may determine the level according to the laundry amount based on the data learned by the laundry amount/laundry material learning module 61. The determination of the laundry amount may be a task of classifying the laundry put into the washing tub 4 into a plurality of pre-set laundry amount level according to the weight (load).

In the embodiment, the laundry amount is classified into five steps (levels), and the load amount (kg) corresponding to each step is shown in Table 1 below. In addition, Table 1 statistically shows the number of household members constituting the household when a corresponding laundry amount is loaded to the washing machine in a single household.

**[Table 1]**

| Laundry amount (five steps) | Load amount | Number of household members |
|---|---|---|
| Level 1 | 0 ∼ 1kg | 1 person |
| Level 2 | 1 ∼ 3kg | 1∼2 people |
| Level 3 | 3 ∼ 5kg | 2 people |
| Level 4 | 5 ∼ 6kg | 3 people or more |
| Level 5 | 6kg or more | |

The determination of the laundry material may be achieved by classifying the laundry loaded into the washing tub 4 according to preset criteria. The criteria may be the material of the laundry, the degree of softness or hardness, the wetting rate, a volume difference between wet laundry and dry laundry.

Based on the present current value acquired from the current detection unit 75, the laundry amount/laundry material recognition module 62 determines which step of a plurality of laundry amount steps corresponds to the laundry loaded to the washing tub 4 and, at this time, which classification corresponds to the laundry material (i.e., the laundry material for each laundry amount).

In the embodiment, the laundry material is classified into five steps (levels), and the types corresponding to each step are shown in Table 2 below. Referring to Table 2 below, the soft and weakly durable clothes series may be classified into level 1, the clothes series having a stronger durability than level 1 may be classified into level 3, the hard clothes series having a stronger durability than level 3 may be classified into level 5, the mixed clothes series of level 1 and level 3 may be classified into level 2, and the mixed clothes series of level 3 and level 5 may be classified into level 4.

**[Table 2]**

| Laundry material (five steps) | Abrasion/Washing strength | Type |
|---|---|---|
| Level 1 | Abrasion: high | Light and soft cloth, delicate material (e.g. silk) underwear |
| | Washing strength: low | |
| Level 2 | Level 1, level 3 clothing mix | |
| Level 3 | Abrasion: mid | Cotton outerwear, cotton/blend underwear |
| | Washing strength: mid | |
| Level 4 | Level 3, level 5 clothing mix | Thick material, tough material, hard clothing (autumn jumper, winter jumper, work clothes, etc.) |
| Level 5 | Abrasion: low | |
| | Washing strength: high | |

The laundry amount/laundry material recognition module 62 may be equipped with artificial neural networks (ANN) previously learned by machine learning. Such artificial neural network may be updated by the laundry amount/laundry material learning module 61.

The laundry amount/laundry material recognition module 62 may determine the laundry amount and the laundry material based on the artificial neural network. If the laundry amount is classified into five levels as in the embodiment, the laundry amount/laundry material recognition module 62 may determine the step to which the laundry amount belongs, and further determine the step to which the laundry material belongs by using the present current value detected by the current detection unit 75 as the input data of the artificial neural network (ANN).

The laundry amount/laundry material recognition module 62 may include an artificial neural network (ANN) that is learned to classify the laundry amount and the laundry material into steps according to a certain criteria. For example, the laundry amount recognition module 62 may include a Deep Neural Network (DNN), such as a Convolutional Neural Network (CNN), a Recurrent Neural Network (RNN), and a Deep Belief Network (DBN), learned by Deep Learning.

The Recurrent Neural Network (RNN) is widely used in natural language processing, and an artificial neural network structure can be constituted by stacking layers at each moment with an effective structure for time-series data processing that varies over time.

The Deep Belief Network (DBN) is a deep learning structure configured by stacking multiple layers of Restricted Boltzmann Machine (RBM) which is a deep learning scheme. The Restricted Boltzmann Machine (RBM) learning may be repeated, and a Deep Belief Network (DBN) having a corresponding number of layers can be constituted when a certain number of layers are achieved.

The Convolutional Neural Network (CNN) is a model that simulates a human brain function based on the assumption that when a person recognizes an object, it extracts the basic features of the object, then undergoes complicated calculations in the brain, and recognizes the object based on the calculation result.

Meanwhile, the learning of artificial neural network may be achieved by adjusting the weight of the inter-node connection (if necessary, adjusting the bias value) so that a desired output is acquired for a given input. The artificial neural network may continuously update the weight value by learning. A scheme such as Back Propagation may be used for learning of artificial neural networks.

The laundry amount/laundry material recognition module 62 may use the present current value as input data, and determine at least one of the laundry amount and the laundry material loaded to the washing tub 4 by using the output of an output layer, based on the weight between the nodes included in the DNN.

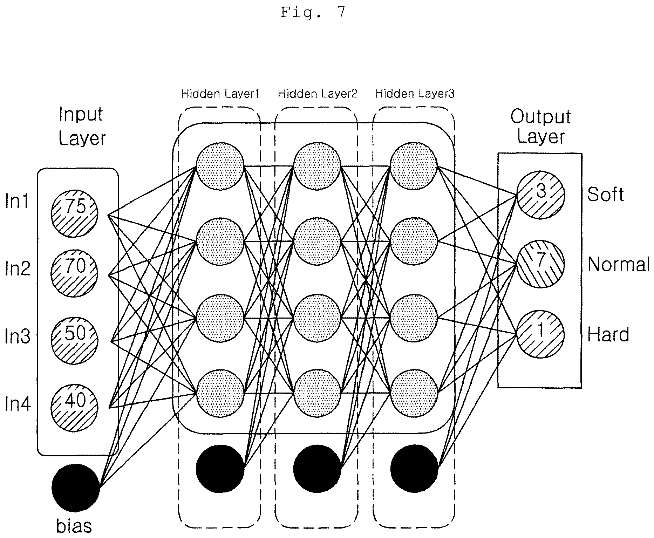

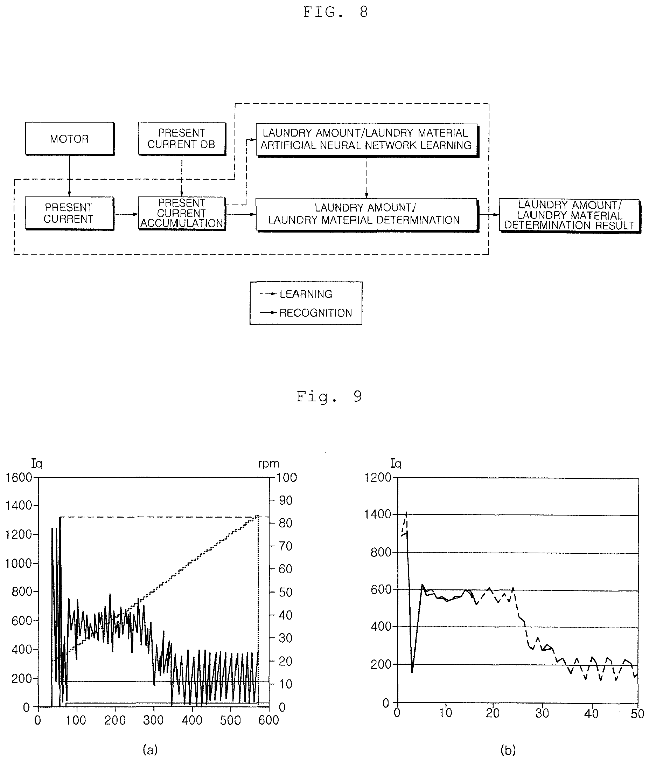

FIG. 7 is a schematic diagram showing an example of an artificial neural network. FIG. 8 is a schematic diagram dividing a process of determining a laundry amount and a laundry material by using a current value of a motor into a learning process and a recognition process.

Referring to FIGS. 7 to 8, a deep learning technology, which is a type of machine learning, is a scheme of performing learning while progressing up to a deep level with multi step based on data.

The deep learning may represent a set of machine learning algorithms that extract key data from multiple data while going through hidden layers in turn.

The deep learning structure may include an artificial neural network (ANN). For example, the deep learning structure may be constituted by a deep neural network (DNN) such as a Convolutional Neural Network (CNN), Recurrent Neural Network (RNN), Deep Belief Network (DBN).

Referring to FIG. 7, the artificial neural network (ANN) may include an input layer, a hidden layer, and an output layer. When multiple hidden layers are provided, it is called Deep Neural Network (DNN). Each layer contains a plurality of nodes, and each layer is associated with the next layer. Nodes can be connected to each other while having weights.

The output of any node belonging to a first hidden layer (Hidden Layer 1) becomes the input of at least one node belonging to a second hidden layer (Hidden Layer 2). At this time, the input of each node may be a value to which a weight is applied to the output of the node of the previous layer. The weight may mean link strength between nodes. The deep learning process may be considered as a process of finding a proper weight.

Here, the well-known face recognition process is reviewed so as to better understand deep learning. The computer may distinguish bright pixel and dark pixel from the input image according to the brightness of the pixel, distinguish simple form such as border and edge, and then distinguish a little bit more complicated shape and object. Finally, the computer may determine the form that defines a human face. Thus, the specification of the feature (defining the human face form) is finally acquired from the output layer after passing through the hidden layers of the middle layer.

The memory 76 may store input data for detecting the laundry amount, and data for learning the deep neural network (DNN). The memory 76 may store motor speed data acquired by the speed detection unit 74 and/or data acquired by summing or calculating speed data by certain intervals. In addition, the memory 76 may store weights and biases constituting a deep neural network (DNN) structure.

Alternatively, in some embodiments, the weights and biases constituting a deep neural network (DNN) structure may be stored in an embedded memory of the laundry amount/laundry material recognition module 62.

Meanwhile, the laundry amount/laundry material learning module 61 may perform learning by using the present current value detected through the current detection unit 75 as training data. That is, the laundry amount/laundry material learning module 61 may update a structure of the deep neural network (DNN) such as weight or bias by adding a determination result to a database whenever recognizing or determining the laundry amount and/or laundry material, or may update a DNN structure such as a weight by performing a learning process by using training data secured after a certain number of training data is secured.

The washing machine according to the embodiment of the present invention may transmit the present current data acquired by the current detection unit 75 through the communication unit 73 to a server (not shown) connected to a communication network, and may receive data related to machine learning from the server. In this case, the washing machine may update the artificial neural network based on data related to the machine learning received from the server.

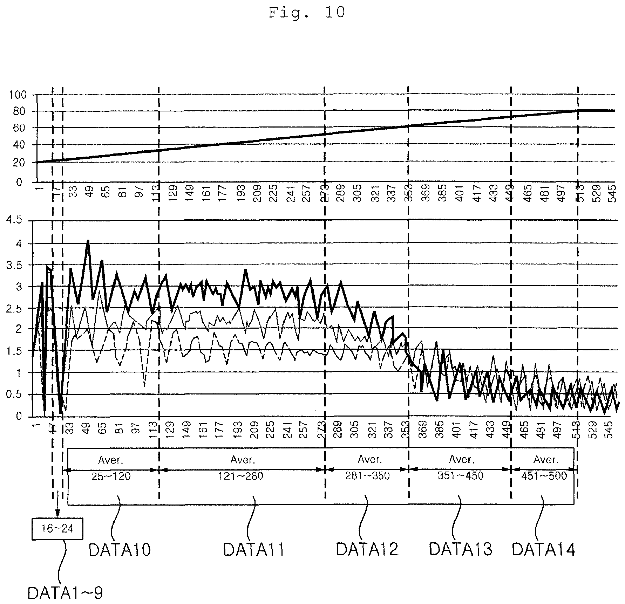

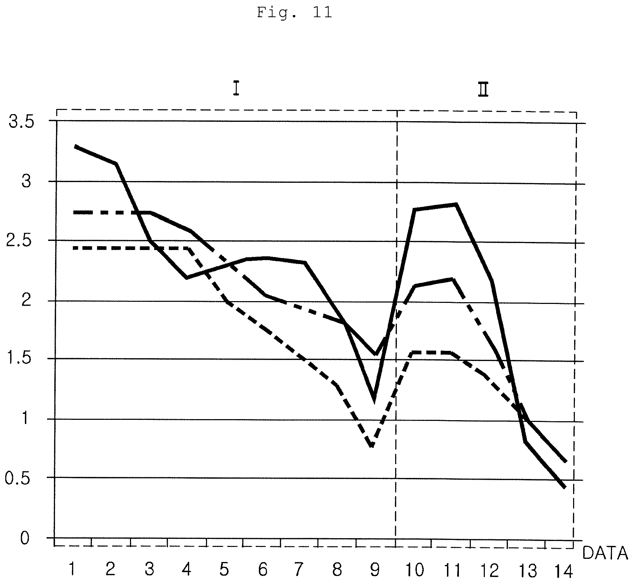

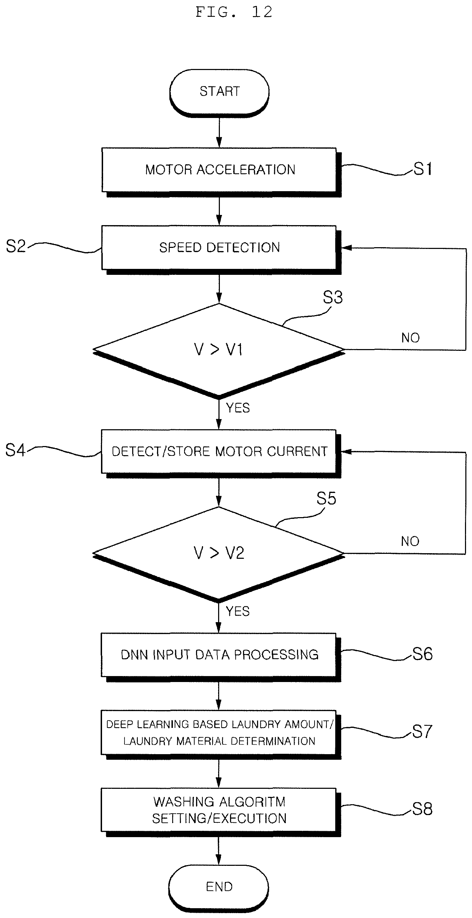

FIG. 9A is a graph showing current value detected by a current detection unit, and FIG. 9B is a graph showing average values acquired by processing a moving average filter. FIG. 10 is a graph showing current values detected by a current detection unit. FIG. 11 is a graph showing values processed so as to use current values of the graph shown in FIG. 9 as input data of an artificial neural network. FIG. 12 is a flowchart illustrating a method of controlling a washing machine according to an embodiment of the present invention. Hereinafter, a method of determining the laundry amount and the laundry material will be described with reference to FIGS. 9 to 12.

The controller 60 controls the motor 9 to rotate at a preset target rotation speed (S1, S2, S3, S4, S5). The rotation speed of the washing tub 4 (or the motor 9) is detected by the speed detection unit 74 while the motor 9 is rotating (S2).

The target rotation speed may be set to the rotation speed of the washing tub 4 that can maintain the state where laundry is attached to the drum 42, when the washing tub 4 maintains the target rotation speed and is continuously rotated once or more in one direction. That is, the target rotation speed may be determined as the rotation speed of the washing tub 4 at which the laundry can rotate integrally with the drum 42. When the washing tub 4 is rotated at the target rotation speed, the centrifugal force acting on the laundry due to the rotation of the washing tub 4 may be larger than the gravitational force acting on the laundry.

The target rotation speed may be 60 to 80 rpm, preferably 80 rpm. Preferably, in the state before the rotation speed of the washing tub 4 reaches the target rotation speed, the laundry flows in the drum 42. That is, the laundry is raised to a certain height due to the rotation of the drum 42, and then fall down.

Meanwhile, the target rotation speed may be determined based on a state in which the washing tub 4 is partly submerged in water as water is supplied into the water storage tank 3. That is, when the washing tub 4 is rotated at the target rotation speed in the state of being partly submerged in water, the laundry may flow. In other words, during the rotation of the washing tub 4, the laundry is not always attached to the drum 42, but may be raised to a certain height and then fall down.

The present current values used to determine the laundry amount and the laundry material include those taken in a section in which the flow of the laundry occurs during the rotation of the washing tub 4. That is, the controller 60 may take necessary present current values based on the rotation speed of the washing tub 4 (or the rotation speed of the motor 9) detected by the speed detection unit 74.

Specifically, after the controller 60 instructs the motor driving unit 71 to accelerate the motor 9, when the rotation speed detected by the speed detection unit 74 reaches a preset first rotation speed V1, the present current value from that time may be stored in the memory 76 (S3 to S4).

At the initial stage of a section for accelerating the motor 9, factors excluding the laundry amount and the laundry material, such as a position where the laundry is placed in the washing tub 4, may be excessively reflected in the current value applied to the motor 9. Therefore, it is preferable to exclude the initial current value of an acceleration section, as the input data for determining the laundry amount and the laundry material. That is, the current value until the rotation speed V of the motor 9 reaches the first rotation speed V1 is not used as input data, and the current value from when reaching the first rotational speed V1 may be detected to be used as input data. The first rotation speed V1 may be slower than the second rotation speed V2, and may be a rotation speed at which the laundry flows in the washing tub 4. The first rotation speed V1 may be 10 rpm to 20 rpm.

When the rotation speed V of the washing tub 4 reaches a preset second rotation speed V2, the controller 60 may treat the present current value without storing the present current value any more (S5 to S6). Here, the second rotation speed V2 is the above mentioned target rotation speed.

Meanwhile, the acceleration slope in a section accelerated from the first rotation speed V1 to the second rotation speed V2 may be constant. It is preferable that the acceleration slope is maintained constant so as to improve the reliability of the current pattern change detection.

The acceleration slope should not be too high so that the change trend of the laundry flow inside the washing tub 4 can be clearly seen. The acceleration slope is preferably 1.5 to 2.5 rpm/s, more preferably 2.0 rpm/s, but is not necessarily limited thereto. The acceleration slope may be as small as possible within a range that can be controlled by the controller 60.

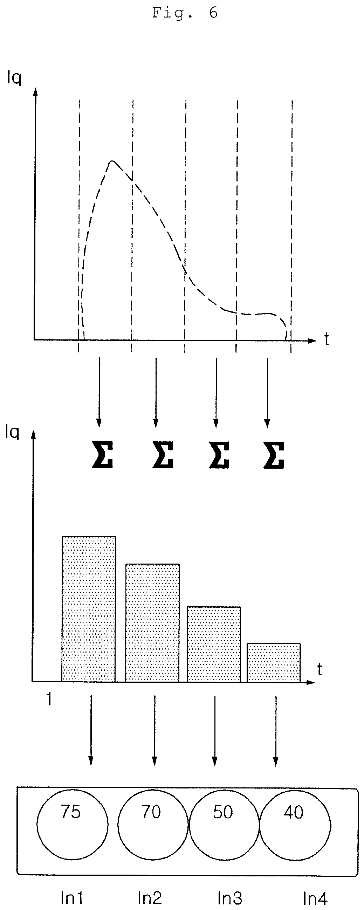

As shown in FIG. 6, the treating of the present current value is a process of processing the present current values Iq acquired at preset time points according to a preset algorithm and generating input data (In1, In2, In3, In4,...) of the input layer of the artificial neural network (S6).

This process may include a step of acquiring an average of the present current values Iq, and a step of treating the acquired average values according to a preset parsing rule to generate input data of the artificial neural network. In particular, the number of input data treated by the parsing rule is less than the number of average values.

Referring to FIG. 8, the controller 60 may acquire a current value at a certain time interval through the current detection unit 75. In the embodiment, a total of 545 present current values are acquired at a certain time interval in a section in which the rotation speed of the washing tub 4 is accelerated from the first rotation speed V1 to the second rotation speed V2.

The controller 60 may average the present current values, which is acquired in such a manner, every certain time section. At this time, the controller 60 may use a moving average filter. Moving average means an operation of acquiring average while moving the section so as to see trend changes. For example, if the present current values are Iq1, Iq2, Iq3 ... Iqn in the time sequential order, M1 is acquired by averaging Iql to Iql (1 < n), and M2 is acquired by averaging Iqm (m > 1) to Iqm+s-1 (s is the number of Iq used to acquire each moving average). Moving averages may be acquired while continuing to move the section in this manner.

The number of moving average values M1, M2, ... may be implemented smaller than the number of total present current Iq, by appropriately setting the time sections through which the moving average is acquired. However, since the resolution of the change trend of the present current becomes lowered as the length of the time section (window) becomes longer, the length of the time section should be appropriately selected. In the embodiment, the controller 60 uses the moving average filter to acquire 50 moving averages from 545 present current values Iq.

The controller 60 may process the present current value and the moving averages according to a preset parsing rule to generate the input data (In1, In2, In3, In4,...). The parsing rule may be configured to select the section through which the final input data is acquired so that the feature to be acquired (laundry amount/laundry material) is well revealed.

Referring to FIG. 10, a total of 14 input data are generated in the embodiment of the present invention. The input data includes nine present current values acquired in the early stage of acceleration of the motor 9 (16th to 24th present current values: DATA1 to DATA9), and five average values (DATA10 to DATA14) in each section acquired by dividing the subsequent section according to a pre-setting. In particular, by acquiring the above mentioned five average values based on the previously acquired moving averages, the calculation can be processed more quickly in comparison with the case of summing the present current values in each section. Meanwhile, such acquired input data (In1, In2, In3, In4, ... In14) becomes the input value of each node of the input layer.

The weight and bias applied to the nodes constituting the artificial neural network are decided by machine learning, and this machine learning is repeated based on the current pattern or the present current values. In addition, since the current pattern (or present current value) reflects the characteristics of the laundry amount and/ or the laundry material, improved or accurate weight and bias value can be set by performing machine learning for the data pre-stored or added by the operation of the washing machine until accurate result (i.e., the exact laundry amount and laundry material currently loaded into the washing tub 4) is derived.

In the artificial intelligence network constructed in this manner, the output of the output layer will reflect the laundry amount and laundry material information, and the controller 60 may determine the laundry amount and/or laundry material based on the node that outputs the largest value among the nodes of the output layer.

The controller 60 may input the input data generated in step S6 to the artificial neural network, and acquire the laundry amount and/or laundry material by using the output of the output layer (S7). Then, the controller 60 may set a washing algorithm based on the laundry amount and/or laundry material acquired in step S7, and control the operation of the washing machine according to the setting (S8). The washing algorithm may include a water supply level, an execution time of washing, rinsing, dewatering, drying, and the like, a driving pattern of the motor in each process (e.g., rotation speed, rotation time, acceleration, braking), and the like.

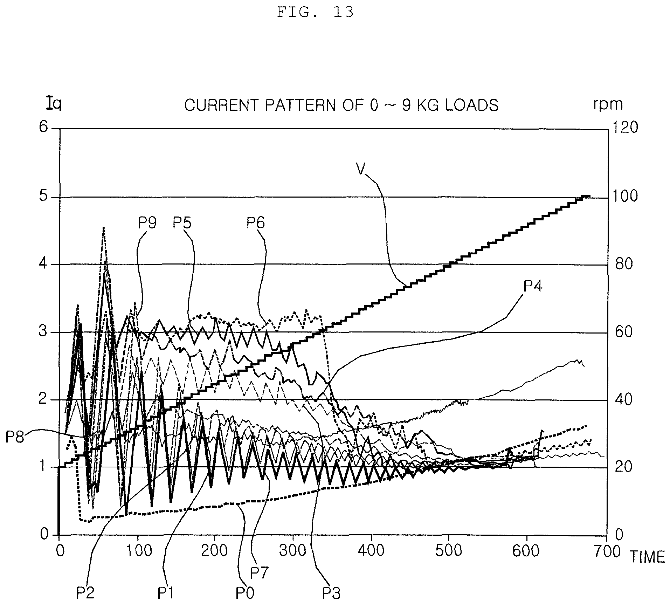

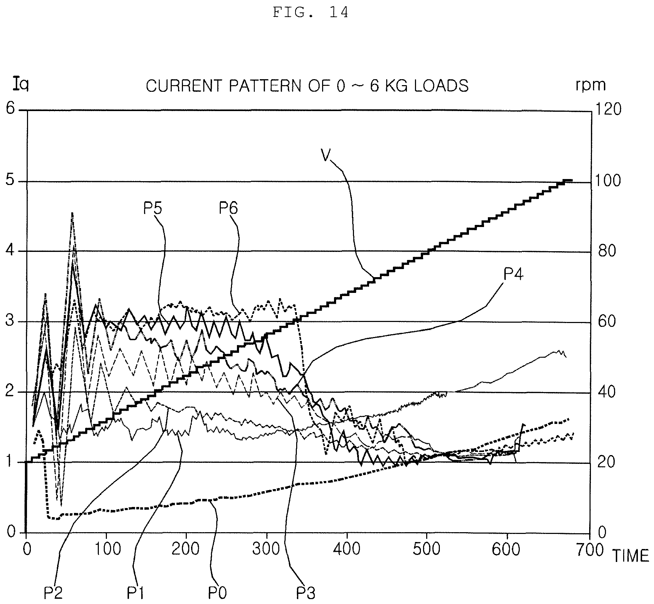

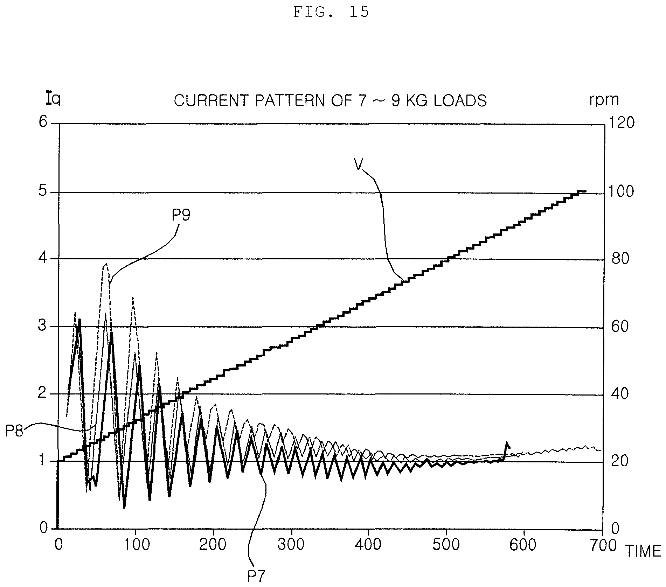

FIG. 13 is a graph in which current patterns for each load are superimposed. FIG. 14 is a graph in which current patterns corresponding to loads of 0 to 6 kg are classified in FIG. 13. FIG. 15 is a graph showing current patterns corresponding to loads of 7 to 9 kg in FIG. 13.

Hereinafter, referring to FIGS. 13 to 15, P0 to P9 shown in drawings indicate load amounts (laundry amount) of 0 to 9 kg, respectively.

A problem that the laundry is restrained by the door 2 may be occurred. Such a phenomenon occurs when a large amount of laundry is loaded into the washing tub 4 to be adhered to or interfered with the door 2. The restraint of the laundry affects the load applied to the motor 9. Therefore, it is preferable to exclude the present current value acquired by rotating (or accelerating) the washing tub 4 in a state in which the laundry is restrained in the process of determining the laundry amount and/or laundry material.

Referring to FIGS. 14 to 15, the current pattern (P0 to P6) in the load amount of 0 to 6 kg and the current pattern (P7 to P9) in the load amount of 7 to 9 kg are clearly distinguished. That is, in the case of a large amount of laundry (7 to 9 kg in the embodiment), it can be seen that the current value is periodically increased or decreased (or vibrated) in the early stage of acceleration of the washing tub 4. This is because the movement of some of the laundries is restrained by the door 2 so that the load of the motor 9 increases when the washing tub 4 is interfered with the restrained laundry and then the load of the motor 9 decreases when the interference is weakened or disappeared. That is, a load variation of the motor 9 due to the restraint of the laundry is generated in correspondence with the rotation period of the washing tub 4.

Such a load variation pattern may be learned through machine learning, and such learning result may be stored in the memory 76 as a database. An artificial neural network may be configured by using such a learning result. Based on such configured artificial neural network, the controller 60 may determine the laundry restraint (or laundry jamming) by the output of the output layer.

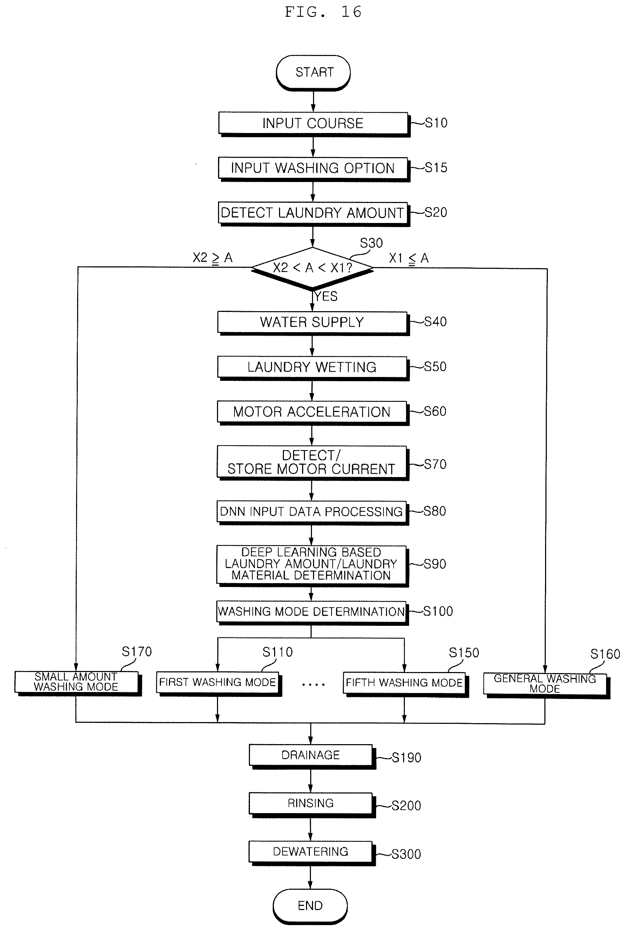

FIG. 16 is a flowchart showing a method of controlling a washing machine according to a first embodiment of the present invention. Hereinafter, the method of controlling a washing machine according to a first embodiment of the present invention will be described with reference to FIG. 16.

A control method of a washing machine according to a first embodiment of the present invention includes a step of acquiring a state of laundry using an artificial neural network. Such a state of laundry may be defined based on various factors, such as the material of laundry, the degree of softness (e.g. soft laundry/hard laundry), the ability of the laundry to hold water (i.e. moisture rate), the volume difference between the dry laundry and the wet laundry, the composition of laundry (i.e. mixing ratio of soft laundry and hard laundry, and the like.

However, when the laundry is constrained to the door 2, the determination of the laundry amount and the laundry material using the artificial neural network may be inaccurate. Therefore, the laundry amount may be acquired by using a conventional laundry amount detection technology, and it may be determined whether to perform the laundry amount/laundry material detection step using an artificial neural network based on the acquired laundry amount.

The control method of the washing machine according to a first embodiment of the present invention includes a first detection step (S20) of acquiring the laundry amount accommodated in the washing tub 4, a step (S30) of selecting any one washing course among a plurality of washing courses based on the first laundry amount A acquired in the first detection step S20, and steps (S40 ∼ S300) of performing the selected washing course.

The plurality of washing courses includes a first washing course that performs washing according to an algorithm (hereinafter, also referred to as a 'washing mode') configured based on the laundry amount accommodated in the washing tub 4. That is, the first washing course does not consider the state of the laundry accommodated in the washing tub 4, but the amount of washing water, the execution time of washing, rinsing, dewatering, drying, and the like, and the motor driving pattern in each process are determined based on the laundry amount A. The washing algorithm of the first washing course corresponds to the washing algorithm of a general washing machine, and the washing mode (S160) of the first washing course may be referred to as a general washing mode.

In addition, the plurality of washing courses includes a second washing course for performing the washing according to the washing mode (S110 to S150) configured based on the laundry amount and the laundry state. That is, the second washing course takes into account both the state and the amount A of the laundry accommodated in the washing tub 4 so as to determine the amount of washing water, the execution time of washing, rinsing, dewatering, drying, and the like, and the motor driving pattern in each process. The washing algorithm of the second washing course is a washing algorithm configured based on the laundry amount and the state of the laundry acquired using the artificial neural network, and the washing modes (S110 to S150) of the second washing course may be referred to as an artificial intelligence washing mode.

In FIG. 16, although the washing mode of the second washing course represents only the first washing mode (S110) and the fifth washing mode (150), and omits the second washing mode (S120), the third washing mode (S130), and the fourth washing mode (S140), the washing mode of the second washing course may include first to fifth washing modes (S110 to S150). In addition, although the first embodiment of the present invention illustrates that the washing mode of the second washing course includes the first to fifth washing modes S110 to S150, the washing mode of the second washing course is not limited thereto. The washing mode of the second washing course may include two or more washing modes.

Meanwhile, the plurality of washing courses may include a third washing course to perform the washing according to a preset washing mode. That is, when the third washing course is selected from among the plurality of washing courses in the first detection step S30, the washing may be performed according to a single washing mode S170 in which the amount of washing water, the execution time of washing, rinsing, dewatering, drying, etc., the motor driving pattern in each process, and the like are previously set. The third washing course may be a tub washing course for washing a very small amount of laundry or washing a washing tub of an empty state, and the washing mode S170 of the third washing course may be referred to as a small washing mode.

Hereinafter, a control method of the washing machine according to the first embodiment of the present invention will be described in detail with reference to FIG. 16.

When the washing machine is turned on, the washing machine may stand by in a state in which the washing course can be input, and may receive the washing course from a user through the input unit 77 (S10). The washing course that can be selected by the user may include various washing courses, such as a standard washing course, a boiling course, a baby clothes course, a stain course, and the like.

The washing machine may receive a washing option from the user through the input unit 77 in the standby state (S15). The washing option may include the washing intensity, the number of times of rinsing (or rinsing time), dewatering intensity (or dewatering time), and temperature of the washing water. The basic option of the washing option may be set based on the washing course inputted in S10. If the user does not input the washing option separately, the washing algorithm may be set according to the basic option.

After the washing course and the washing option are inputted, the washing machine acquires the laundry amount accommodated in the washing tub (S20). Acquiring the laundry amount (S20) means the above described first detection step. In the first detection step S20, the laundry amount may be acquired by the conventional method of detecting the amount of dry laundry.

The controller 60 determines whether to perform washing based on the laundry amount, based on a first laundry amount A acquired in the first detection step, or to acquire the state of the laundry using an artificial neural network and perform washing based on the state of the laundry (S30). That is, the controller 60 selects any one washing course from among a plurality of washing courses including a first washing course to perform the washing according to the washing mode configured based on the laundry amount, and a second washing course to perform the washing according to the washing mode configured based on the laundry state acquired using the artificial neural network as well as the laundry amount (S30).

In addition, the plurality of washing courses may include a third washing course that performs washing according to a preset washing mode. That is, the third washing course does not execute any one of the plurality of washing modes classified according to the laundry amount and/or the state of the laundry, and may be a course that performs washing according to one preset washing mode.

In the step S30 of selecting the washing course based on the first laundry amount A, the first washing course for performing washing based on the laundry amount A is selected without acquiring the state of the laundry when the laundry can be easily restrained by the door 2. When the possibility that laundry is restrained by the door 2 is low, the state of the laundry is acquired by using an artificial neural network, and a second washing course for performing washing based on the laundry amount and the laundry state is selected. Further, even when the possibility that laundry is restrained by the door 2 is low, the third washing course may be selected if the laundry is not accommodated in the washing tub or when the amount of the accommodated laundry is extremely small.

When the laundry amount A accommodated in the washing tub 4 is greater than or equal to a certain amount, as described above with reference to FIGS. 13 to 15, a problem that the laundry is restrained by door 2 may occur. When the first laundry amount A acquired in the first detection step S30 is equal to or greater than the first threshold value X1, the controller 60 may select the first washing course (S30, S160).

The first threshold value X1 may be preset to the laundry amount having a high probability that the laundry is restrained by the door. In the present embodiment, the first threshold value X1 may be preset to a value corresponding to 7 kg.

Meanwhile, FIGS. 13 to 15 illustrate a current pattern by inputting laundry from a designer's point of view, and a user may randomly input laundry in real life. Therefore, even in the case of the same amount, the volume may be larger in the initial stage, so that the laundry may be restrained by the door even if less than 7kg is inputted. Therefore, the first threshold value X1 may be 7 kg or less. For example, the first threshold value X1 may be set to 5 kg. Referring to Table 1, the output for the laundry amount in the output layer of the artificial neural network may be a laundry amount of 1 to 3 levels.

When the first laundry amount A acquired in the first detection step S30 is smaller than the first threshold value X1, the controller 60 may select the second washing course (S30, S40). When the plurality of washing courses further includes a third washing course, the controller 60 may select the second washing, when the first laundry amount A is smaller than the first threshold value X1 and larger than a second threshold value X2 described later.

When the first laundry amount A acquired in the first detection step S30 is smaller than the second threshold value X2, the controller 60 may select a third washing course (S30, S170).

The second threshold value X2 may be preset in the case where the controller 60 determines that the laundry is not accommodated in the washing tub 4, or one or two pairs of laundries are received based on the first laundry amount A. Therefore, the second threshold value X2 may be smaller than the first threshold value X1. In the present embodiment, the second threshold value X1 may be preset to a value corresponding to 1 kg.

In an embodiment of the present invention, the first threshold value X1 may be set to a value corresponding to 7 kg, and the second threshold value X2 may be set to a value corresponding to 1 kg. In this case, the controller 60 may select the first washing course when the first laundry amount A is 7 kg or more, select the second washing course when the first laundry amount A is greater than 1 kg and less than 7 kg, and select the third washing course when the first laundry amount A is 1 kg or less.

In the present embodiment, it is described that the first or the third washing course is selected when the first laundry amount corresponds to a boundary value (1 kg, 7 kg), but it may be set to select the second washing course according to the designer's change. In addition, a specific numerical value of the first and second threshold values X1 and X2 is an example for explaining the present invention, and is not meant to limit the present invention. The numerical value of the first and second threshold values X1 and X2 may be set according to the size of the washing tub 4.

Meanwhile, the washing course and/or washing option received from the user through the input unit 77 may not be suitable for performing the washing based on the state of the laundry.

For example, it may not be suitable for performing the washing based on the state of the laundry, when the user does not desire to acquire the laundry state using an artificial neural network, when the tub washing course is selected, and when the temperature of the washing water equal to or higher than a certain temperature is selected.

The washing course selectable by the user through the input unit 77 may include the first washing course. When the first washing course is inputted through the input unit 77, even if the laundry amount A is smaller than the first threshold value X1, the controller 60 may select the first washing course in step S30.

The washing course selectable by the user through the input unit 77 may include a tub washing course. When the tub washing course is inputted through the input unit, the controller 60 may select the third washing course.

When the temperature of the washing water inputted through the input unit 77 is equal to or higher than a preset limit temperature, the controller 60 may select the first washing course. The limit temperature may be the temperature of the washing water used in the boiling course. The limit temperature may be set to a temperature equal to or higher than 90°C, and in the embodiment of the present invention, is set to 95°C.

When the temperature of the washing water is higher than or equal to the limit temperature, the current value Iq applied to the motor 9 in a section in which the washing tub 4 is accelerated may be different from the case where the temperature of the washing water is lower than the limit temperature. In addition, when washing is performed with washing water of a temperature applied to the boiling course, the laundry of light and soft material is likely to be damaged. When the user inputs the temperature of the washing water higher than or equal to the above-mentioned temperature limit, the laundry accommodated in the washing tub generally has a low risk of damage due to washing, and may require high washing performance.

Therefore, when the temperature of the inputted washing water is higher than or equal to the limit temperature, the controller 60 may select the first washing course.

Hereinafter, the first washing course will be described.

In the first washing course, a washing algorithm may be determined based on the laundry amount. The first washing course performs washing according to a general washing mode, and the general washing mode may include a plurality of general washing modes classified based on the laundry amount. The controller 60 may control the water supply valve 5 to determine the amount of washing water supplied to the washing tub 4 based on the first laundry amount A, and control the motor 9 to perform the washing according to the washing mode selected based on the first laundry amount A from among the plurality of general washing modes (S160).

The plurality of general washing modes may include the first general washing mode and the second general washing mode that have the same algorithms respectively set as the third washing mode and the fourth washing mode of the second washing course described later.

The second general washing mode may be set to an algorithm suitable for washing a large amount of laundry, in comparison with the first general washing mode. In the second general washing mode, a washing algorithm may be set at a rotation speed of the washing tub which is relatively faster than that of the first general washing mode and a high net acting ratio. In addition, the algorithm may be set to supply a greater amount of washing water in comparison with the first general washing mode. The temperature of the washing water in the second general washing mode may be set equal to or higher than the temperature of the washing water in the first general washing mode.

The description that the general washing mode includes the first and second general washing modes is just an example of the washing algorithm of the first washing course, and the general washing mode may be classified into three or more general washing modes.

After the general washing mode is terminated, the drainage of the washing water (S190), and the rinsing process (S200) and the dewatering process (S300) in which the process time is set based on the first laundry amount A may be performed. The controller 60 may set the process time of the rinsing process (S200) and the dewatering process (S300) as the first laundry amount A increases.

Hereinafter, the second washing course will be described.

The second washing course may include a water supply step S40 of supplying the washing water into the washing tub 4. The water supply step S40 may be performed before the second detection steps (S60 to S90).

The above-described method of acquiring the laundry amount and the laundry state by an output while using the present current value Iq of the motor 9 as the input data of the input layer of the artificial neural network may determine the laundry amount and the laundry state more accurately when the laundry is in a wet state in comparison with the dry state.

Therefore, when the first laundry amount A is smaller than the first threshold value X1 and larger than the second threshold value X2, before acquiring the laundry amount and the laundry state, the controller 60 adjusts the water supply valve 5 to supply washing water to the washing tub 4 (S40).

After supplying the washing water, a laundry wetting step (S50) of wetting the laundry is performed. The laundry wetting step (S50) is a step for increasing the accuracy of the laundry material/laundry amount determination using the artificial neural network. At the initial stage when the washing water is supplied to the washing tub 4, some of the laundry accommodated in the washing tub 4 may be excessively filled with water, while other may not be wetted with water. In such a state, with respect to the current value Iq which accelerates the washing tub 4 and is applied to the motor 9, a different current value may be detected even in the case of the same laundry amount/ laundry material.

Therefore, in the laundry wetting step (S50), the washing tub 4 is supplied with the washing water and then stands by for a certain time, or the laundry may be evenly wet by rotating the washing tub 4. In addition, when the washing machine is provided with a circulation pump (not shown) for circulating water stored in the water storage tank 3 and a circulation nozzle (not shown), the washing water may be circulated to efficiently wet the laundry.

The second washing course includes a second detection step (S60 ∼ S90) of acquiring the state of the laundry using an artificial neural network. The second detection step (S60 ∼ S90) may acquire the laundry state by an output of an output layer (see FIG. 7) of an artificial neural network while using a current value Iq applied to the motor 9 for rotating the washing tub 4 during an accelerated rotation of the washing tub 4 as an input data of an input layer (see FIG. 7) of the artificial neural network previously learned by machine learning. In the second detection step (S60 ∼ S90), the laundry state and the laundry amount A accommodated in the washing tub 4 may be acquired by the output of the output layer of the artificial neural network while using the current value Iq as input data of the input layer of the artificial neural network. Hereinafter, the amount of laundry acquired in the second detection step 30 may also be referred to as a second laundry amount A2 by distinguishing it from the first laundry amount A1 acquired in the first detection step 30.

After the wetting step (S50), the laundry amount and the laundry state may be acquired through the same steps S60 to S90 as S1 to S7 described with reference to FIG. 12. That is, S60 includes S1, S2 and S3, S70 includes S4 and S5, S80 is the same as S6, and S90 is the same step as S7.

In the second detection step (S60 to S90) includes a step S60 of accelerating the washing tub 4 (or the motor 9), a step S70 of acquiring a current value Iq applied to the motor 9 in a section in which the washing tub 4 is accelerated and rotated, a step S80 of using the current value Iq as input data of the input layer of the artificial neural network, and a step S90 of acquiring the laundry amount and the laundry state by the output of the output layer of the artificial neural network (S90).

The step S60 of accelerating the washing tub 4 includes a step of detecting the rotation speed V of the motor 9 (or washing tub 4). The step S60 of accelerating the washing tub 4 includes a step of accelerating the washing tub 4 from the first rotational speed V1 to a second rotation speed V2 faster than the first rotation speed V1. The step S60 of accelerating the washing tub 4 may include a step of accelerating the rotation speed V of the washing tub 4 at a constant acceleration from the first rotation speed V1 to the second rotation speed V2. That is, the controller 60 may accelerate the motor 9 at a constant acceleration when accelerating the motor 9 from the first rotation speed (S60 to S90) 1 to the second rotation speed V2.

The step (S80, S90) of acquiring the laundry amount and the laundry state includes a step of using the current value Iq applied to the motor 9 as the input data of the input layer of the artificial neural network in a section in which the rotation speed V of the washing tub 4 is accelerated from the first rotation speed V1 to the second rotation speed V2. More specifically, the step (S80, S90) of acquiring the laundry amount and the laundry state may include a step of selecting a current value corresponding to a section in which the rotation speed V of the motor is accelerated from the first rotation speed V1 to the second rotation speed V2 from among the current values obtained in S70 based on the detected speed value, and a step of using the selected current value as the input data of the input layer of artificial neural network.

The second washing course may include a step S100 of selecting any one washing mode based on the laundry state acquired in the second detection step among the plurality of washing modes, after the second detection step (S60 to S90). The step (S100) of selecting the washing mode may select any one washing mode based on the laundry amount and the laundry state. The laundry amount A may be a first laundry amount A1 acquired in the first detection step S30. Alternatively, the laundry amount A may be a second laundry amount A2 acquired in the second detection step S60 to S90.

The plurality of washing modes may include the first to fifth washing modes described above. The laundry state may be classified in consideration of the risk of wear and the washing intensity of the laundry. In addition, the plurality of washing modes may be classified in consideration of the risk of wear and the washing intensity of the laundry.

The second washing course may include a step (S110 to S150) of performing washing according to the washing mode selected in the step S100 of selecting the washing mode.

Hereinafter, referring to Table 3, an example of a method of selecting (S100) a washing mode based on the laundry amount and the laundry state, and performing washing (S110 to S150) according to the selected washing mode will be described.

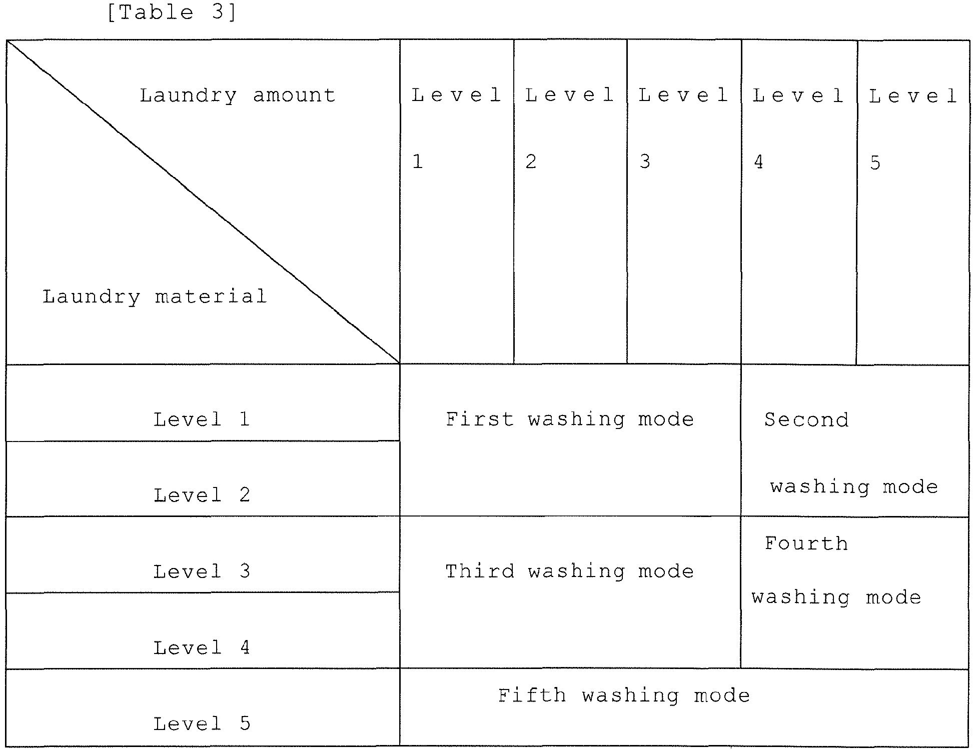

Referring to Tables 1 to 3, if the laundry material is among level 1 or level 2, and the laundry amount is among levels 1 to 3, the controller may select the first washing mode. In addition, the controller may select the second washing mode when the laundry material is level 1 or level 2, and the laundry amount is levels 4 to 5.

Referring to Table 2, in the case where the laundry state is level 1 or level 2, the laundry put in the washing tub 4 is laundry of a soft material which is easy to be worn by washing, and needs to be washed according to a washing algorithm that does not damage the laundry. In addition, since the laundry of such a material is often relatively less contaminated, relatively high washing performance is not required.

Therefore, in the first washing mode, the washing algorithm may be set to a relatively slow rotation speed of the washing tub, a low temperature of washing water, and a low net acting ratio in comparison with other washing mode. The net acting ratio refers to the ratio of the time when the motor operates to the washing time.

When the first washing mode is selected, washing is performed according to the algorithm of the first washing mode (S110).

The controller 60 may select the second washing mode, when the laundry state is level 1, level 2 or when the laundry amount is large (level 4, level 5). The second washing mode may be set to an algorithm suitable for washing a large amount of laundry, in comparison with the first washing mode.

When washing is performed by setting the second washing mode to the same washing algorithm as the first washing mode, the washing performance may be deteriorated due to a large amount of laundry. Therefore, in the second washing mode, the washing algorithm may be set to a rotation speed of the washing tub 4 which is relatively faster than the first washing mode, and a high net acting ratio. In addition, the algorithm may be set to supply a larger amount of washing water in comparison with the first washing mode. However, the temperature of the washing water may be set equal to the temperature of the washing water in the first washing mode in order to lower the risk of damage to the laundry.

If the second washing mode is selected, washing is performed according to the algorithm of the second washing mode (S120).

The laundry having the laundry state of levels 3 and 4 is less likely to be damaged by washing in comparison with the laundry having the laundry state of levels 1 and 2, and may be relatively heavily contaminated. Therefore, in the third washing mode, the washing algorithm may be set to a relatively high rotation speed of the washing tub 4, a high temperature of washing water, and a high net acting ratio, in comparison with the first and second washing modes.

When the third washing mode is selected, washing is performed according to the algorithm of the third washing mode (S130).

The controller 60 may select a fourth washing mode when the laundry state is level 3, level 4, or when the amount of the laundry is large (level 4, level 5). The fourth washing mode may be set to an algorithm suitable for washing a large amount of laundry, in comparison with the third washing mode.

For the same reason as that described in the second washing mode, in the fourth washing mode, the washing algorithm may be set to a relatively high rotation speed of the washing tub 4, and a high net acting ratio, in comparison with the third washing mode. In addition, the algorithm may be set to supply a larger amount of washing water, in comparison with the third washing mode. The temperature of the washing water in the fourth washing mode may be set to be equal to or higher than the temperature of the washing water in the third washing mode.

When the fourth washing mode is selected, washing is performed according to the algorithm of the fourth washing mode (S140).

When the laundry state is level 5, the laundry put in the washing tub is a laundry made of a tough material which does not need to be worried about the laundry damage due to washing. Accordingly, when the laundry state is level 5, the controller 60 may select washing level 5 regardless of the laundry amount. In a fifth washing mode, a washing algorithm having an excellent washing performance may be set. In the fifth washing mode, the washing algorithm may be set to a high rotation speed of the washing tub 4, a high temperature of washing water, and a high net acting ratio, in comparison with the third and fourth washing modes.

When the fifth washing mode is selected, washing is performed according to the algorithm of the fifth washing mode (S150).

The rotation speed of the washing tub 4 may be set within a range in which the laundry flows in the washing tub 4. In the first to fifth washing modes, the rotation speed may be set within the range of 30 rpm to 60 rpm.

Meanwhile, in consideration of the risk of wear of the laundry and the washing intensity, the washing time may be set to a longer time in a washing mode requiring high washing performance. However, if the washing time of the first washing mode is short, the washing performance may be too low. In the fifth washing mode, the washing time is long and the user may feel uncomfortable. Therefore, the washing times in the first to fifth washing modes may be set to be the same.

After the selected washing mode is terminated, the rinsing process (S200) and the dewatering process (S300) in which the process time is set based on the drainage of the washing water (S190), and the laundry amount (A) may be performed.

Hereinafter, the third washing course will be described.

In the third washing course, a small amount of laundry is accommodated in the washing tub 4, or washing may be performed according to a washing algorithm suitable for the tub washing course. Unlike the first and second washing courses, the third washing course may perform washing according to a preset washing mode by one algorithm.

In general, in the case of washing a small amount of laundry of about one or two pairs of, there are many cases for preventing damage to laundry and migration from other laundry. Such laundry is often a soft laundry. In addition, in order to wash the washing tub 4, washing may be performed without putting a laundry. In consideration of this, when the first laundry amount A is less than or equal to the second threshold value X2, the third washing course may be performed.

In the washing mode of the third washing course (hereinafter, also referred to as a 'small amount washing mode'), a washing algorithm that focuses on preventing damage to the laundry rather than washing performance may be set. In the small washing mode, the same algorithm as that of the first washing mode of the second washing course may be set.

When the third washing course is selected, the washing process is performed according to the small amount washing mode (S30, S170), and after the small amount washing mode is terminated, the drainage of washing water (S190), the rinsing process (S200), and the dewatering process (S300) may be performed.

The description of the above-described washing mode is merely an example for the sake of understanding, and is not intended to limit the present invention.

Although the above description is based on a front load type in which the washing tub 4 is rotated about a substantially horizontal axis, the washing machine and the control method of the washing machine of the present invention can be also applied to a top load type.

Meanwhile, the method of operating the washing machine according to the embodiment of the present invention can be implemented as a code readable by a processor on a recording medium readable by the processor. The processor-readable recording medium includes all kinds of recording apparatuses in which data that can be read by the processor is stored. Examples of the recording medium that can be read by the processor include a ROM, a RAM, a CD-ROM, a magnetic tape, a floppy disk, an optical data storage apparatus, and the like, and may also be implemented in the form of a carrier wave such as transmission over the Internet. In addition, the processor-readable recording medium may be distributed over network-connected computer systems so that code readable by the processor in a distributed fashion can be stored and executed.

The washing machine and the control method according to the present invention can analyze a current pattern of a motor based on a machine learning based artificial neural network. Particularly, such a current pattern varies depending on the state of the laundry accommodated in the washing tub, and reflects the characteristics of various laundries such as the laundry amount, the laundry material, the flow of the laundry. Therefore, by using the current pattern as the input data of the artificial neural network constituted through the learning based on the machine learning, the laundry can be classified accurately and quickly.

Particularly, such a laundry classification according to characteristic can be achieved by not only laundry amount but also by various criteria such as the laundry material, the moisture rate, the volume of the wet laundry and the dry laundry. Furthermore, the accuracy can be further improved as the training data (motor current data) of machine learning is accumulated.

In addition, when the amount of laundry accommodated in the washing tub is a certain level or more, it is difficult to accurately detect the laundry amount and/or the laundry state through a current pattern analysis due to the friction between the laundry and the door. Therefore, it is determined whether it is difficult to determine the accurate laundry state due to the friction of laundry according to the laundry amount, so that washing suitable for the situation can be performed.

In addition, when the amount of laundry accommodated in the washing tub is very small, generally, soft laundry is often washed. Alternatively, there may be a case where the tub washing course is performed in the state of the empty washing tub. In this case, a suitable washing can be performed in a short time by performing a washing mode suitable for washing a very small amount of soft laundry or accomplishing a tub washing without analyzing the current pattern.

## Claims

1. A method of controlling a washing machine, the method comprising:
a first detection step of acquiring amount of laundry accommodated in a washing tub;
selecting any one washing course from among a plurality of washing courses including a first washing course performing washing according to a washing mode configured based on the amount of laundry and a second washing course performing washing according to a washing mode configured based on the amount of the laundry and a state of the laundry; and
performing the selected washing course,
wherein the second washing course includes a second detection step of acquiring the state of the laundry by an output of an output layer of an artificial neural network while using a current value applied to a motor for rotating the washing tub during an accelerated rotation of the washing tub as an input data of an input layer of the artificial neural network previously learned by machine learning,
wherein selecting any one washing course comprises selecting any one washing course from among the plurality of washing courses based on a first laundry amount acquired in the first detection step.

2. The method of claim 1, wherein selecting the washing course comprises:
selecting the first washing course, when the first laundry amount is equal to or more than a preset first threshold value; and
selecting the second washing course, when the first laundry amount is less than the first threshold value.

3. The method of claim 1, or 2, wherein the plurality of washing courses further comprises a third washing course that performs washing according to a preset washing mode.

4. The method of claim 3, wherein selecting the washing course comprises:
selecting the first washing course, when the first laundry amount is equal to or more than a preset first threshold value;
selecting the second washing course, when the first laundry amount is greater than a second threshold value less than the first threshold value, and is less than the first threshold value; and
selecting the third washing course, when the first laundry amount is equal to or less than the second threshold value.

5. The method of any one of claims 1 to 4, wherein the second detection step comprises:
accelerating and rotating the washing tub from a first rotation speed up to a second rotation speed that is faster than the first rotation speed;
acquiring a current value applied to the motor in a section in which the washing tub is accelerated and rotated; and
acquiring the laundry state by the output of the output layer of the artificial neural network, while using the current value as the input data.

6. The method of claim 5, wherein the second rotation speed is a rotation speed at which the laundry is rotated integrally with the washing tub.

7. The method of claim 5, or 6, wherein accelerating and rotating the washing tub comprises:
accelerating a rotation speed of the washing tub at a constant acceleration from the first rotation speed up to the second rotation speed.

8. The method of claim 5, 6, or 7, wherein acquiring the laundry state comprises using the current value applied to the motor as the input data in a section in which the rotation speed of the washing tub is accelerated from the first rotation speed up to the second rotation speed.

9. The method of any one of claims 5 to 8, wherein the second detection step further comprises detecting a rotation speed of the washing tub,
wherein acquiring the laundry state comprises:
selecting a current value corresponding to a section in which the rotation speed of the washing tub is accelerated from the first rotation speed up to the second rotation speed among current values acquired in acquiring a current value, based on the detected speed value; and
using the selected current value as the input data.

10. The method of any one of claims 1 to 9, wherein the second detection step comprises acquiring an amount of the laundry accommodated in the washing tub by the output of the output layer of the artificial neural network while using the current value as the input data.

11. The method of any one of claims 1 to 10, wherein the second washing course comprises:
selecting any one washing mode based on the state of the laundry among a plurality of washing modes, after the second detection step; and
performing washing according to the selected washing mode.

12. The method of claim 11, wherein the plurality of washing modes is classified in consideration of a risk of wear of the laundry and a washing intensity.

13. The method of any one of claims 1 to 11, wherein the state of the laundry is classified in consideration of a risk of wear of the laundry and a washing intensity.

14. The method of any one of claims 1 to 13, wherein, before the second detection step, the second washing course further comprises a water supply step of supplying washing water into the washing tub.

15. A washing machine configured to perform the control method according to any one of claims 1 to 14.
